# EUROPÄISCHE PATENTSCHRIFT

(11) **EP 0 457 058 B1**
(45) Veröffentlichungstag und Bekanntmachung des Hinweises auf die Patenterteilung: **19.07.1995**
(21) Anmeldenummer: 91106424.4
(22) Anmeldetag: 22.04.1991
(51) Int. Cl.: H02B 1/54

(54) **Hochspannungsgerät**
High voltage apparatus
Appareil à haute tension

(30) Priorität: 17.05.1990 CH 1663/90
(43) Veröffentlichungstag der Anmeldung: 21.11.1991
(73) Patentinhaber: ASEA BROWN BOVERI AG, 5400 Baden (CH)
(72) Erfinder: Spicak, Karel, CH-8052 Zürich (CH); Akesson, Ulf, S-77100 Ludvika (SE)

(56) Entgegenhaltungen:
- EP-A- 0 077 042
- GB-A- 771 392
- US-A- 2 516 072
- US-A- 3 794 277

## Beschreibung

### TECHNISCHES GEBIET

Die Erfindung geht aus von einem Hochspannungsgerät gemäss dem Oberbegriff des Anspruchs 1.

### STAND DER TECHNIK

Aus der US-Patentschrift 3,794,277 ist ein Hochspannungsgerät mit einer kippbar gelagerten Grundplatte bekannt, welche mittels einer aus mehreren Dämpferelementen aufgebauten Dämpfungseinrichtung gegen die Auswirkungen mechanisch angeregter Kippschwingungen geschützt wird. Reaktionskräfte werden zum Teil durch die Dämpferelemente aufgenommen und auf ein das Hochspannungsgerät tragende Fundament übertragen. Als Dämpferelemente werden bekannte Stossdämpfer in Verbindung mit einer nur im Erdbebenfall wirksamen Feder eingesetzt.

Aus der Patentschrift DE 3 139 956 (enstpricht EP-A- 0 077 042) ist ein Hochspannungsgerät mit einer kippbar gelagerten Grundplatte bekannt, welche mittels einer Dämpfungseinrichtung gegen die Auswirkungen mechanisch angeregter Kippschwingungen geschützt wird. Die Dämpfungseinrichtung ist aus Dämpferelementen aufgebaut, welche in einem Gehäuse angeordnet sind. Reaktionskräfte werden vom Gehäuse aufgenommen und auf ein das Hochspannungsgerät tragende Fundament übertragen.

Als Dämpferelemente werden hier Ringfedern eingesetzt, um Kippschwingungen zu dämpfen und die Anregung von Schwingungen im Bereich der mechanischen Eigenfrequenzen des Hochspannungsgerätes zu vermeiden. Die Ringfedern wirken dabei als Federelemente, welche Energie aufnehmen und zeitlich verzögert wieder abgeben, sie wirken aber gleichzeitig auch als Reibelemente, welche einen Teil der aufgenommenen Energie in Reibungswärme umsetzen, sodass weniger mechanische Energie abgegeben wird als aufgenommen wurde. Diese Ringfedern sind Bauelemente, die sehr genau gefertigt werden müssen und deren Verwendung vergleichsweise hohe Ansprüche an Einbautoleranzen und Wartung stellt.

### DARSTELLUNG DER ERFINDUNG

Hier will die Erfindung Abhilfe schaffen. Die Erfindung, wie sie in den Ansprüchen gekennzeichnet ist, löst die Aufgabe, ein Hochspannungsgerät zu schaffen, welches eine einfach zu erstellende Dämpfungseinrichtung für mechanisch angeregte Kippschwingungen aufweist.

Die durch die Erfindung erreichten Vorteile sind im wesentlichen darin zu sehen, dass dank der Aufteilung der Dämpfungsfunktionen in den Dämpferelementen auf zwei unabhängig voneinander arbeitende Elemente, eine mit vergleichsweise geringem Aufwand zu erstellende Dämpfungseinrichtung möglich wird. Besonders vorteilhaft wirkt es sich aus, dass die Wirkung der zwei unabhängig voneinander arbeitenden Elemente, auch unabhängig voneinander jeweils verstärkt oder abgeschwächt werden kann, sodass die Dämpfungseinrichtung einfach an die jeweiligen Aufstellungsbedingungen des Hochspannungsgerätes angepasst werden kann. Insbesondere gelingt es auf diese Art sehr einfach den Einfluss von winderregten Kippschwingungen, die ja von Aufstellungsort zu Aufstellungsort variieren, sicher zu eliminieren.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen möglichen Ausführungsweg darstellt, näher erläutert.

### KURZE BESCHREIBUNG DER ZEICHNUNG

Es zeigen:
- Fig.1: eine erste Ausführungsform des Hochspannungsgerätes,
- Fig.2: eine zweite Ausführungsform des Hochspannungsgerätes,
- Fig.3: eine erste Detailskizze eines Teils des Hochspannungsgeräts, und
- Fig.4: eine zweite Detailskizze eines Teils des Hochspannungsgeräts.

Bei allen Figuren sind gleich wirkende Elemente mit gleichen Bezugszeichen versehen.

### WEGE ZUR AUSFÜHRUNG DER ERFINDUNG

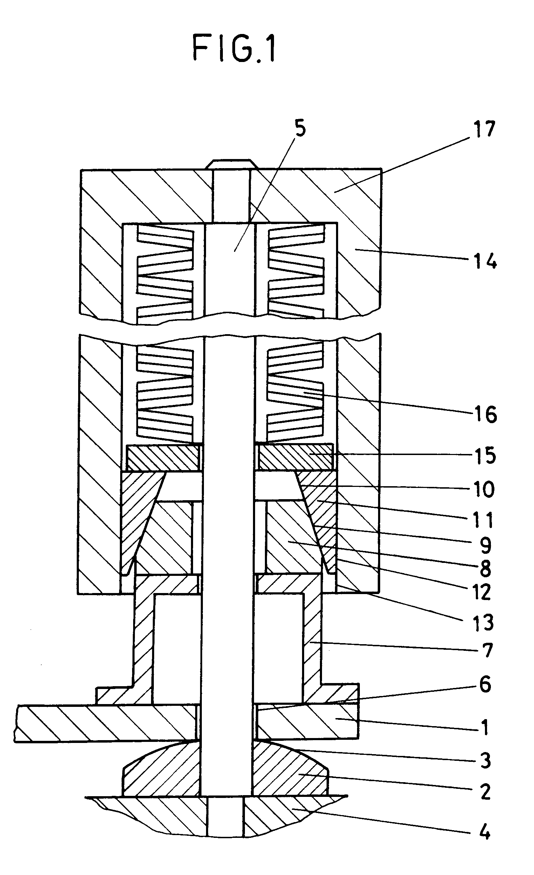

In der Figur 1 ist eine erste Ausführungsform eines Hochspannungsgerätes dargestellt. Eine Grundplatte 1 des Hochspannungsgerätes ist auf einer Walzunterlage 2 gelagert, deren Oberfläche 3 als in der Mitte abgeflachte Kugelkalotte ausgebildet ist. Die Walzunterlage 2 wird in der Mitte durch einen fest in ein Fundament 4 eingelassenen Bolzen 5 durchdrungen. Die Grundplatte 1 weist eine Bohrung 6 auf, durch welche der Bolzen 5 hindurchführt. Die Bohrung 6 ist so dimensioniert, dass Kippbewegungen der Grundplatte 1 möglich sind. Auf die Grundplatte 1 stützt sich konzentrisch zum Bolzen 5 ein Mitnehmer 7 ab. Der Mitnehmer 7 kann fest mit der Grundplatte 1 verbunden sein, er kann jedoch auch lediglich auf dieser aufliegen. Der Mitnehmer 7 trägt einen Ring 8, der konzentrisch zum Bolzen 5 angebracht ist. Mitnehmer 7 und Ring 8 können auch einstückig ausgebildet sein. Der Ring 8 weist auf der dem Bolzen 5 abgewandten Seite eine konisch von unten nach oben zu enger werdende Fläche 9 auf. Auf diese Fläche 9 stützt sich ein Gegenkonus 10 ab, der innen in einem Reibring 11 angebracht ist. Der Reibring 11 weist eine zylindrisch ausgebildete Aussenfläche 12 auf, die mit einer Innenfläche 13 eines zylindrisch ausgebildeten Gehäuses 14 zusammenwirkt.

Auf einer flachen Oberseite des Reibringes 11 liegt eine Zwischenscheibe 15 auf. Die Zwischenscheibe 15 teilt den Innenraum des Gehäuses 14 in einen Raum für Reibelemente unterhalb und einen Raum für Federelemente oberhalb derselben auf. Als Federelemente sind hier beispielsweise schematisch Tellerfedern 16 in verschieden geschichteten Paketen angedeutet. Anstelle der Tellerfedern können auch federnde Pakete aus verschiedenen, den jeweiligen Betriebsanforderungen angepassten Gummisorten eingesetzt werden. Die Tellerfedern 16 stützen sich einerseits auf die Zwischenscheibe 15 ab und andererseits auf ein oberes Teil 17 des Gehäuses 14, welches dessen zylindrisch ausgebildeten Innenraum nach oben hin abschliesst. Mit dem Zentrum dieses Teiles 17 ist der Bolzen 5 fest verbunden. Die Tellerfedern 16 sind vorgespannt, sodass das Gehäuse 14, die Zwischenscheibe 15, der Reibring 11, der Ring 8, der Mitnehmer 7 und die Grundplatte 1 mit der Walzunterlage 2 gegen das Fundament 4 gedrückt werden. In einer weiteren, nicht dargestellten Ausführungsvariante ist es möglich, den mit einem Gewinde versehenen Bolzen 5 durch eine Öffnung des Teiles 17 ragen zu lassen und mittels einer auf den Bolzen 5 aufgeschraubten Mutter das Teil 17 bzw. das Gehäuse 14 zu fixieren und gegebenenfalls die Tellerfedern 16 vorzuspannen.

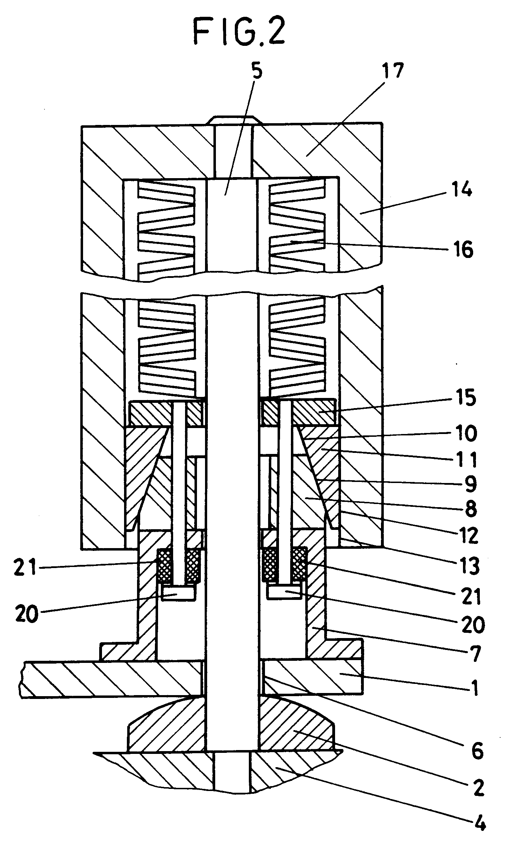

Fig. 2 zeigt eine zweite Ausführungsform, welche sich von der in Fig. 1 gezeigten dadurch unterscheidet, dass der Ring 8 gegen den Reibring 11 vorgespannt werden kann. Ferner sind der Mitnehmer 7 und der Ring 8 bei dieser Ausführungsform fest mit der Grundplatte 1 verbunden. Schrauben 20 durchdringen den Mitnehmer 7 und den Ring 8 und sind in die Zwischenscheibe 15 eingeschraubt. Werden die Schrauben 20 angezogen, so wird die Zwischenscheibe 15 gegen den Reibring 11 und dieser gegen den Ring 8 gedrückt. Um diese Vorspannung auch über längere Zeit sicher aufrecht erhalten zu können, werden zwischen den Köpfen der Schrauben 20 und dem Mitnehmer 7 Federelemente 21 vorgesehen. Als Federelemente 21 können, wie gezeigt, Gummielemente oder auch Tellerfedern eingesetzt werden. Die Vorspannung wird hier stets unabhängig von den Tellerfedern 16 aufgebracht.

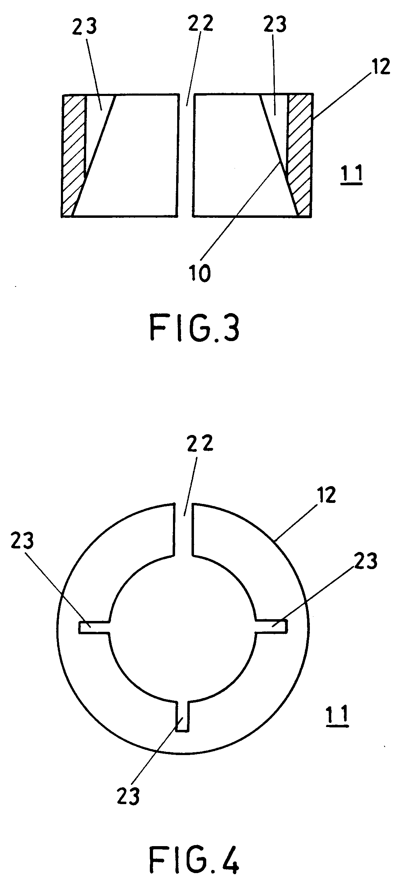

Fig. 3 zeigt einen Schnitt durch einen Reibring 11 aus einer Aluminiumlegierung. Der Reibring 11 weist auf einer Seite einen durchgehenden Schlitz 22 und Nuten 23 auf. Die Nuten 23 reduzieren den Querschnitt des Reibringes 11. Es sind, wie hier gezeichnet, axial erstreckte Nuten 23 möglich oder auch radial nach aussen führende. Es ist auch möglich den Reibring 11 aus einzelnen nebeneinander liegenden Stücken zusammenzustellen, die auch aus verschiedenen Materialien hergestellt sein können. Der Reibring 11 kann auch aus Materialien die eine organische Komponente enthalten gefertigt sein. Ferner kann der Reibring 11 eine Oberflächenbeschichtung aufweisen auf dem Gegenkonus 10 und/oder auf der Aussenfläche 12, um dort die Reibeigenschaften zu verbessern oder um sie konstanter zu halten, und um den Verschleiss zu verkleinern.

Fig. 4 zeigt eine Draufsicht auf den Reibring 11 gemäss Fig. 3. Die Nuten 23 sind am Umfang des Reibringes 11 verteilt, ihre Anzahl richtet sich nach den an diesen gestellten Anforderungen.

Zur Erläuterung der Wirkungsweise sei die Fig. 1 näher betrachtet. Wenn das Hochspannungsgerät Kippbewegungen ausführt, welche beispielsweise durch Erdstösse angeregt wurden, so bewegt sich die Grundplatte 1 zunächst nach oben und drückt den Mitnehmer 7 in das Gehäuse 14 hinein. Ein Teil der dafür aufgewendeten Energie wird durch die Tellerfedern 16 aufgenommen, die zusammengedrückt werden, ein weiterer Teil dieser Energie wird durch die Reibung zwischen Ring 8 und Reibring 11 und hauptsächlich zwischen Reibring 11 und der Innenfläche 13 des Gehäuses 14 in Wärme umgesetzt. Sobald die Bewegung der Grundplatte 1 nach oben zum Stillstand gekommen ist, geben die Tellerfedern 16 die gespeicherte Energie wieder frei und die Grundplatte 1 wird nach unten beschleunigt. Auch bei dieser Abwärtsbewegung wird im Bereich des Reibelements zunächst noch etwas Bewegungsenergie in Wärme umgesetzt. Das Dämpferelement gibt also nicht mehr die volle, zunächst hineingesteckte Bewegungsenergie an die Grundplatte 1 ab, sondern lediglich die um die entstandene Wärmeenergie reduzierte Energiemenge. Unmittelbar nach dem Beginn der Abwärtsbewegung lösen sich der Ring 8 und der Reibring 11 voneinander, sodass keine Reibung mehr möglich ist. Erst in der Endstellung, vor einer erneuten Bewegung nach oben, sind Ring 8 und Reibring 11 wieder in Berührung.

Beim Abdämpfen der Kippbewegungen arbeiten alle Dämpferelemente der Dämpfungseinrichtung zusammen, bis die im Hochspannungsgerät verbleibende Bewegungsenergie nicht mehr ausreicht die Dämpferelemente zum Ansprechen zu bringen. Das Hochspannungsgerät schwingt dann mit vergleichsweise kleinen Amplituden aus bis zum Ruhezustand. Die Dämpferelemente werden so ausgelegt, dass sie bei vergleichsweise schwachen Schwingungen des Hochspannungsgerätes, wie sie beispielsweise durch Windböen erzeugt werden können, nicht in Funktion treten.

Wie in Fig. 2 gezeigt, können die Reibelemente vorgespannt werden. Energieschwache Kippschwingungen werden in diesem Fall nicht oder nur geringfügig durch die Dämpferelemente abgedämpft. Erst wenn die auf das jeweilige Dämpferelement einwirkende Bewegungsenergie so gross wird, dass die Reibung zwischen der Aussenfläche 12 des Reibringes 11 und der Innenfläche 13 des Gehäuses 14 überwunden wird, spricht das Dämpferelement an und dämpft die Kippschwingungen ab. Dies bedeutet, dass die Grundplatte 1 auf ihrem Weg nach oben abgedämpft wird, wobei ein Teil der Bewegungsenergie durch die Tellerfedern 16 aufgenommen wird, ein weiterer Teil dieser Energie wird durch die Reibung zwischen Ring 8 und Reibring 11 und hauptsächlich zwischen Reibring 11 und Innenfläche 13 des Gehäuses 14 in Wärme umgesetzt. Sobald die Grundplatte 1 ihre Bewegung umkehrt, geben die Tellerfedern 16 die gespeicherte Energie wieder frei und die Grundplatte 1 wird nach unten beschleunigt. Bei dieser Abwärtsbewegung wird im Bereich des Reibelements wieder Bewegungsenergie in Wärme umgesetzt. Das Dämpferelement gibt also bei weitem nicht mehr die volle, zunächst hineingesteckte Bewegungsenergie an die Grundplatte 1 ab, sondern lediglich die um die entstandene Wärmeenergie reduzierte Energiemenge. Die Reibung des Reibelementes ist hier in der Regel so stark, dass eine vollständige Rückkehr des Dämpferelementes in die Ausgangslage nur wegen der Unterstützung durch die schwingende Masse des Hochspannungsgerätes möglich ist. Die Grundplatte 1 zieht über den fest mit ihr verbundenen Mitnehmer 7 das Reibelement nach unten.

Auf diese Weise wird das Reibelement nur dann beansprucht, wenn wirklich das Hochspannungsgerät gefährdende Bewegungsenergien abgebaut werden müssen, sodass der Verschleiss im Reibelement infolge von Abrieb zwischen Fläche 9 und Gegenkonus 10 und zwischen Aussenfläche 12 und Innenfläche 13 auf ein Minimum beschränkt wird und somit die Wartungsintervalle für die Dämpfungselemente verlängert werden. Zudem wird hierdurch gleichzeitig die Anzahl der auf die Federelemte einwirkenden Lastwechsel reduziert und so deren Lebensdauer erhöht. Dadurch, dass die Vorspannung unabhängig vom Federelement aufgebracht werden kann, lässt sich die Charakteristik der Dämpferelemente in einem weiten Bereich den Betriebsanforderungen anpassen, ohne dass die Federelemente dauernd statisch hoch vorbelastet werden müssen, wodurch deren Lebensdauer erhöht wird.

Die Grundplatte 1 des Hochspannungsgerätes wird in der Regel mit mindestens drei Dämpferelementen versehen, um Kippschwingungen allseitig zu dämpfen. Häufig werden auch vier Dämpferelemente eingesetzt. Die gezeigten Dämpferelemente können auch durch ein Weglassen der Walzunterlage 2 etwas vereinfacht werden. Es ist auch möglich, wenn entsprechende Anforderungen gestellt werden, in den Dämpferelementen mehrere Reibelemente hintereinander zu schalten, wobei die jeweiligen Konusse gleiche Winkel oder von Reibelement zu Reibelement verschiedene Winkel aufweisen können.

Werden Hochspannungsgeräte, beispielsweise Schalter, mit Porzellanisolatoren als Tragelementen mit einer Dämpfungseinrichtung versehen, so ist es sinnvoll, diese in unmittelbarer Nähe des untersten Halteflansches der Porzellanisolatoren anzuordnen. Dieser Halteflansch entspricht dann der Grundplatte 1. Wird das jeweilige Hochspannungsgerät oben auf einem vergleichsweise starren Metallgerüst aufgestellt, so wird die Dämpfungseinrichtung zweckmässigerweise zwischen dem Metallgerüst und dem Hochspannungsgerät angeordnet. Die beste Wirkung der Dämpfungseinrichtung wird erzielt, wenn sie in unmittelbarer Nähe eines gefährdeten Querschnitts angeordnet ist. In der Regel ist bei Hochspannungsgeräten mit Porzellanisolatoren als Tragelementen der Übergang von Porzellanisolator auf den untersten Halteflansch der am meisten gefährdete Querschnitt.

Die Materialpaarungen zwischen Ring 8, Reibring 11 und Gehäuse 14 spielen für das Betriebsverhalten der Reibelemente eine wichtige Rolle. Der Reibring 11 kann aus einem weniger harten oder gleich harten oder eventuell aus einem härteren Material wie der Ring 8 gefertigt sein und dabei gleichzeitig auch aus einem härteren oder weniger harten oder gleich harten Material wie das Gehäuse 14 gefertigt sein. Es lassen sich stets vorteilhafte Materialpaarungen für eine optimale, den jeweiligen Betriebsanforderungen angepasste Gestaltung der Reibelemente finden. Besonders bewährt hat sich ein Aufbau, bei welchem der Ring 8 aus Stahl und der Reibring 11 und das Gehäuse 14 aus einer Aluminiumlegierung gefertigt waren. Bei diesem Aufbau waren die Fläche 9 und der Gegenkonus 10 um 20° geneigt gegen eine Mittelachse des Reibelements. Neigungswinkel im Bereich von 12° bis etwa 30° werden für derartige Reibelemente als sinnvoll angesehen und können auch, den Betriebsanforderungen entsprechend, realisiert werden.

Der Reibring 11 soll sowohl an der Fläche 9 als auch an der Innefläche 13 anliegen, um einen innigen Kontakt dieser Flächen und damit ein optimales Reibverhalten mit grösstmöglicher Erzeugung von Wärme zu erreichen. Der Reibring 11 wird deshalb durch Nuten 23 im Querschnitt geschwächt, sodass er sich, ohne nennenswert durch seine innere Festigkeit behindert zu werden, seiner Umgebung optimal anpassen kann. Ein besonders gutes Reibverhalten würde sich ergeben, wenn der Reibring 11 aus einzelnen Segmenten zusammengesetzt würde. Als Kompromiss bezüglich Montageproblematik bietet sich der Reibring 11 gemäss Fig. 3 und 4 an, der einseitig aufgeschlitzt ist und dessen Querschnitt zusätzlich durch eine Vielzahl von Nuten 23 geschwächt ist. Die Anzahl von Nuten 23 muss so gewählt werden, dass die Fläche des Gegenkonus 10 nicht zu sehr verkleinert wird, da sonst das Reibverhalten verschlechtert wird. Würde der Reibring 11 aus einzelnen Segmenten zusammengesetzt, so könnten die einzelnen Segemente aus unterschiedlichen Materialien bestehen, um optimale Reibeigenschaften zu erzielen.

## Patentansprüche

1. Hochspannungsgerät mit einer kippbar gelagerten Grundplatte (1), mit mindestens einer aus Dämpferelementen aufgebauten, in einem Gehäuse (14) angeordneten Dämpfungseinrichtung für mechanisch angeregte Kippschwingungen der Grundplatte (1), wobei das Gehäuse (14) starr mit einem das Hochspannungsgerät tragenden Fundament (4) verbunden ist, und wobei jedes der Dämpferelemente mindestens ein Federelement und mindestens ein separates Reibelement aufweist, dadurch gekennzeichnet,
- dass das Gehäuse (14) zylindrisch ausgebildet ist,
- dass das mindestens eine separate Reibelement mindestens einen Ring (8) mit einem Konus und mindestens einen mit diesem und mit einer Innenfläche (13) des Gehäuses (14) zusammenwirkenden Reibring (11) mit einem Gegenkonus (10) aufweist, und
- dass das Gehäuse (14) für die Aufnahme von aus dem Zusammenwirken von Ring (8) und Reibring (11) herrührenden Kräften ausgelegt ist.

2. Hochspannungsgerät nach Anspruch 1, dadurch gekennzeichnet,
- dass das mindestens eine separate Reibelement mit einer mechanischen Vorspannung beaufschlagbar ausgebildet ist,
- dass diese mechanische Vorspannung unabhängig vom mindestens einen Federelement aufbringbar ist, und
- dass das Reibelement über einen Mitnehmer (7) mit der Grundplatte (1) fest verbunden ist.

3. Hochspannungsgerät nach Anspruch 1, dadurch gekennzeichnet,
- dass der mindestens eine Reibring (11) mindestens eine in axialer oder radialer Richtung erstreckte Nut (23) aufweist.

4. Hochspannungsgerät nach Anspruch 1, dadurch gekennzeichnet,
- dass der mindestens eine Reibring (11) an mindestens einer Stelle in radialer Richtung aufgeschnitten ist.

5. Hochspannungsgerät nach einem der Ansprüche 1 bis 4, dadurch gekennzeichnet,
- dass der mindestens eine Reibring (11) aus einem weniger harten oder gleich harten Material wie der Ring (8) gefertigt ist.

6. Hochspannungsgerät nach einem der Ansprüche 1 bis 4, dadurch gekennzeichnet,
- dass der mindestens eine Reibring (11) aus einem härteren oder weniger harten oder gleich harten Material wie das Gehäuse (14) gefertigt ist.

7. Hochspannungsgerät nach mindestens einem der Ansprüche 1 bis 6, dadurch gekennzeichnet,
- dass unterhalb der Dämpfungseinrichtung zwischen Grundplatte (1) und Fundament (4) eine Walzunterlage (2) vorgesehen ist.

8. Hochspannungsgerät nach Anspruch 7, dadurch gekennzeichnet,
- dass eine Oberfläche (3) der Walzunterlage (2) im wesentlichen als abgeflachte Kugelkalotte ausgebildet ist.

9. Hochspannungsgerät nach Anspruch 1, dadurch gekennzeichnet,
- dass die mindestens eine Dämpfungseinrichtung in einem Gehäuse (14) angeordnet ist, welches über ein das Hochspannungsgerät tragende Gestell mit dem Fundament (4) verbunden ist, und
- dass die mindestens eine Dämpfungseinrichtung in unmittelbarer Nähe eines gefährdeten Querschnitts des Hochspannungsgerätes angeordnet ist.

## Claims

1. High-voltage device having a tiltably mounted baseplate (1), and having at least one damping device, constructed from damper elements and arranged in a housing (14), for mechanically excited relaxation oscillations of the baseplate (1), the housing (14) being connected rigidly to the foundation (4), and each of the damper elements having at least one resilient element and at least one separate friction element, characterized in that
- the housing (14) is constructed cylindrically,
- the at least one separate friction element has at least one ring (8) having a cone and at least one friction ring (11), having a mating cone (10), interacting with this cone and with an inner surface (13) of the housing (14), and
- the housing (14) is designed to absorb forces produced by the interaction of the ring (8) and friction ring (11).

2. High-voltage device according to Claim 1, characterized in that
- the at least one separate friction element is constructed to be capable of mechanical pretensioning,
- this mechanical pretensioning can be applied independently of the at least one resilient element, and
- the friction element is rigidly connected to the baseplate (1) via a driver (7).

3. High-voltage device according to Claim 1, characterized in that
- the at least one friction ring (11) has at least one groove (23) extending in the axial or radial direction.

4. High-voltage device according to Claim 1, characterized in that
- the at least one friction ring (11) is cut open in the radial direction at at least one point.

5. High-voltage device according to one of Claims 1 to 4, characterized in that
- the at least one friction ring (11) is produced from a material that in relation to the ring (8) is less hard, or equally hard.

6. High-voltage device according to one of Claims 1 to 4, characterized in that
- the at least one friction ring (11) is produced from a material that in relation to the housing (14) is harder, or less hard, or equally hard.

7. High-voltage device according to at least one of Claims 1 to 6, characterized in that
- an antifriction support (2) is provided underneath the damping device between the baseplate (1) and foundation (4).

8. High-voltage device according to Claim 7, characterized in that
- one surface (3) of the antifriction support (2) is essentially constructed as a flattened calotte.

9. High-voltage device according to Claim 1, characterized in that
- the at least one damping device is arranged in a housing (14) which is connected to the foundation (4) via a frame supporting the high-voltage device, and
- the at least one damping device is arranged in the immediate vicinity of an endangered cross-section of the high-voltage device.

## Revendications

1. Appareil à haute tension avec une plaque de base (1) supportée de manière basculable, avec au moins un dispositif d'amortissement constitué d'éléments d'amortissement, disposé dans un boîtier (14), pour les mouvements oscillatoires de basculement d'origine mécanique de la plaque de base (1), dans lequel le boîtier (14) est rigidement assemblé à une fondation (4) portant l'appareil à haute tension, et dans lequel chacun des éléments d'amortissement présente au moins un élément élastique et au moins un élément de friction distinct, caractérisé en ce que
- le boîtier (14) est de forme cylindrique; en ce que
- ledit au moins un élément de friction présente au moins une bague (8) avec un cône et au moins une bague de friction (11) avec un contre-cône (10), qui coopère avec celle-ci et avec une surface intérieure (13) du boîtier (14); et en ce que
- le boîtier (14) est configuré pour reprendre les efforts engendrés par la coopération de la bague (8) et de la bague de friction (11).

2. Appareil à haute tension suivant la revendication 1, caractérisé en ce que
- ledit au moins un élément de friction est configuré de façon à pouvoir être soumis à une précontrainte mécanique; en ce que
- cette précontrainte mécanique peut être appliquée indépendamment dudit au moins un élément élastique; et en ce que
- l'élément de friction est solidement relié à la plaque de base (1) par une pièce d'entraînement (7).

3. Appareil à haute tension suivant la revendication 1, caractérisé en ce que
- ladite au moins une bague de friction (11) présente au moins une rainure (23) s'étendant en direction axiale ou radiale.

4. Appareil à haute tension suivant la revendication 1, caractérisé en ce que
- ladite au moins une bague de friction (11) est entaillée en au moins un endroit en direction radiale.

5. Appareil à haute tension suivant l'une des revendications 1 à 4, caractérisé en ce que
- ladite au moins une bague de friction (11) est fabriquée en une matière moins dure ou de même dureté que la bague (8).

6. Appareil à haute tension suivant l'une des revendications 1 à 4, caractérisé en ce que
- ladite au moins une bague de friction (11) est fabriquée en une matière plus dure ou moins dure ou de même dureté que le boîtier (14).

7. Appareil à haute tension suivant l'une des revendications 1 à 6, caractérisé en ce que
- il est prévu un support à rouleau (2) sous le dispositif d'amortissement entre la plaque de base (1) et la fondation (4).

8. Appareil à haute tension suivant la revendication 7, caractérisé en ce que
- une face supérieure (3) du support à rouleau (2) a essentiellement la forme d'une calotte sphérique aplatie.

9. Appareil à haute tension suivant la revendication 1, caractérisé en ce que
- ledit au moins un dispositif d'amortissement est disposé dans un boîtier (14), qui est relié à la fondation (4) par une charpente portant l'appareil à haute tension; et en ce que
- ledit au moins un dispositif d'amortissement est disposé à proximité immédiate d'une section transversale menacée de l'appareil à haute tension.
